# EUROPÄISCHE PATENTANMELDUNG

(11) **EP 2 148 104 A1**
(43) Veröffentlichungstag der Anmeldung: **27.01.2010**
(21) Anmeldenummer: 08013120.4
(22) Anmeldetag: 21.07.2008
(51) Int. Cl.: F16C 32/04

(54) **Magnetisches Radiallager sowie magnetisches Lagersystem mit Stromversorgung**

(71) Anmelder: Siemens Aktiengesellschaft, 80333 München (DE)
(72) Erfinder: Vollmer, Rolf, 36129 Gersfeld (DE)

(57) **Zusammenfassung**

Ein magnetisches Radiallager (1) weist in Umfangrichtung verteilt angeordnete Elektromagneten (1u,2u;1v,2v;1w,2w) auf. Erfindungsgemäß weisen die Elektromagnete (1u,2u;1v,2v;1w,2w) jeweils eine gemeinsamen Spule (L1u,L2u;L1v,L2v;L1w,L2w) zur Erzeugung einer Vormagnetisierung und eines magnetischen, mehrphasigen Drehfeldes auf. Es sind eine erste und zweite Hälfte der Spulen (L1u,L1v,L1w;L2u,L2v,L2w) jeweils in einem Sternpunkt (S1,S2) zusammengeschaltet. Beide Sternpunkte (S1,S2) sind zum Anschließen an eine Gleichstromversorgung (2) zur Vormagnetisierungserregung vorgesehen. Die verbleibenden Spulenenden sind zum parallelen Anschließen an einem entsprechenden mehrphasigen Drehstromsteller (3) zur Drehfelderregung vorgesehen.

## Beschreibung

Die Erfindung betrifft ein magnetisches Radiallager mit in Umfangrichtung verteilt angeordneten Elektromagneten. Derartige Lager werden auch als aktive magnetische Lager oder aktive Magnetlager bezeichnet.

Die Erfindung betrifft weiterhin ein magnetisches Lagersystem, welches ein derartiges magnetisches Radiallager sowie einen mehrphasigen Drehstromsteller für die Drehfelderregung und eine Gleichstromversorgung für die Vormagnetisierungserregung aufweist. Der Drehstromsteller ist vorzugsweise ein Umrichter.

Mit "radial" sind Richtungen zu einer Drehachse der aufgenommenen Rotorwelle und weg von ihr bezeichnet. Mit "axial" sind Richtungen parallel zur Drehachse und mit "in Umfangsrichtung" tangentiale Richtungen um die Drehachse der Rotorwelle bezeichnet. Bei betrieblicher Lagerung der Rotorwelle entspricht die Drehachse der Rotorwelle faktisch einer konstruktiven Rotationsachse bzw. Rotationssymmetrieachse des magnetischen Radiallagers.

Aus dem europäischen Patent EP 0 845 084 B1 ist eine radiale, aktive magnetische Maxwell-Lagervorrichtung mit einer Vormagnetisierung, umfassend zumindest drei verteilt angeordnete Elektromagneten und einen Leistungssteller zur Ansteuerung der Spulen der Elektromagneten, bekannt. Es ist als Leistungssteller ein dreiphasiger Drehstromsteller vorgesehen. Es sind entsprechend einer dortigen Ausführungsform sechs Elektromagneten in einer Umfangsrichtung um 60° versetzt angeordnet, wobei die Elektromagneten als Drehfeldmaschinenstator mit einer Dreiphasenwicklung ausgestaltet sind. Zur Erzeugung der Vormagnetisierung ist zumindest eine zusätzliche Spule vorgesehen. Die Elektromagneten sind in einer Stern- oder Dreieckschaltung mit dem dreiphasigen Drehstromsteller verbunden. Weiterhin ist in der EP 0 845 084 B1 ein Verfahren zum Betrieb einer derartigen magnetischen Maxwell-Lagervorrichtung offenbart, bei dem die Lage des Rotors in einer x- und y-Richtung durch einen Sollwert vorgebbar ist. Es wird die Lage des Rotors in x- und y-Richtung mit einem Positionssensor erfasst. Es wird die Regelabweichung in x- und y-Richtung berechnet. Anschließend werden über eine 2/3-Phasen-Transformation die Sollstromwerte für einen dreiphasigen Drehstromsteller berechnet und diesem vorgegeben, sodass die Spulen der Elektromagneten derart mit Strom versorgt werden, dass die Lage des Rotors dem vorgebbaren Sollwert entspricht.

Derartige Lager sind zur berührungslosen, verschleißfreien Lagerung einer Rotorwelle einer rotierenden Maschine vorgesehen. Die betrachteten Maschinen können eine Masse von mehr als einer Tonne und eine elektrische Nennleistung von mehr als 500 kW, insbesondere von mehreren Megawatt, aufweisen. Derartige Maschinen sind z.B. Elektromotoren, Generatoren, Turbomaschinen, Kompressoren, Pumpen und dergleichen. Sie können eine maximale Drehzahl von 4000 U/min und mehr aufweisen. Im betriebsmäßigen Einsatz wird ein Luftspalt vorzugsweise im Bereich von 0,3 mm bis 0,5 mm zwischen dem magnetischen Radiallager und der zu lagernden Rotorwelle aufrechterhalten.

Ausgehend von dem eingangs genannten Stand der Technik ist es eine Aufgabe der Erfindung, ein hinsichtlich des Wicklungsaufbaus einfacheres, magnetisches Radiallager anzugeben. Zudem ist es eine Aufgabe, ein kompakteres magnetisches Radiallager bei sonst vergleichbaren Lagerungseigenschaften anzugeben.

Schließlich ist es eine Aufgabe der Erfindung, ein geeignetes magnetisches Lagersystem mit einem derartigen magnetischen Radiallager anzugeben.

Diese Aufgabe wird durch ein (aktives) magnetisches Radiallager mit den Merkmalen des Patentanspruchs 1 gelöst. In den abhängigen Ansprüchen 2 bis 5 sind vorteilhafte Ausführungsformen angegeben. Im unabhängigen Anspruch 6 ist ein magnetisches Lagersystem mit einem derartigen magnetischen Radiallager genannt. Vorteilhafte Ausführungsformen des magnetischen Lagersystems sind in den Ansprüchen 7 bis 9 angegeben.

Erfindungsgemäß weisen die Elektromagneten jeweils eine gemeinsame Spule zur Erzeugung einer Vormagnetisierung und eines magnetischen Drehfeldes auf. Es sind eine erste und zweite Hälfte der Spulen jeweils in einem Sternpunkt zusammengeschaltet. Die beiden Sternpunkte sind zum Anschließen an eine Gleichstromversorgung zur Vormagnetisierungserregung vorgesehen. Die verbleibenden Spulenenden sind zum Anschließen parallel an einen der Anzahl der Phasen des Drehfeldes entsprechenden mehrphasigen Drehstromsteller zur Drehfelderregung vorgesehen.

Der große Vorteil der Erfindung ist, dass im Vergleich zum Stand der Technik anstelle von zwei Spulen je Elektromagnet nur eine (einzige) Spule benötigt wird. Dadurch vereinfacht sich der Wicklungsaufbau des erfindungsgemäßen magnetischen Radiallagers sowohl in schaltungstechnischer Hinsicht als auch im Hinblick auf den Bewicklungsaufwands erheblich. Ein weiterer Vorteil ist, dass ein derartiges Radiallager durch die Verwendung nur einer einzigen Spule je Elektromagnet kompakter realisiert werden kann.

Nach einer vorteilhaften Ausführungsform weist das magnetische Radiallager eine der Phasenanzahl entsprechende Anzahl von Phasenanschlüssen sowie zwei Vormagnetisierungsanschlüsse auf. Im Falle einer Phasenanzahl von drei weist das Radiallager folglich drei Phasenanschlüsse und zwei Vormagnetisierungsanschlüsse auf. Mit anderen Worten kann das erfindungsgemäße Radiallager über fünf elektrische Anschlüsse mit dem Drehstromsteller und mit der Gleichstromversorgung verbunden werden. Alternativ dazu können die parallelen Spulenenden sowie die beiden Sternpunkte über weitergeführte, elektrische Anschlussleitungen mit dem Drehstromsteller und der Gleichstromversorgung verbunden sein.

Nach einer besonders vorteilhaften Ausführungsform sind die Elektromagneten als Drehfeldmaschinenstator mit einer Mehrphasenwicklung ausgestaltet. In diesem Fall wird die Mehrphasenwicklung in entsprechende Statornuten des magnetischen Radiallagers eingelegt bzw. eingewickelt. Auf diese Weise ist ein besonders kompaktes magnetisches Radiallager erhältlich.

Einer weiteren vorteilhaften Ausführungsform zufolge ist der Drehfeldmaschinenstator derart bewickelt, dass sich eine Polpaarzahl p_{V} der Vormagnetisierung und eine Polpaarzahl p_{D} des Drehfeldes um den Wert 1 unterscheiden. Dadurch ist bei vorgebbarer Phasenlage des angelegten Drehfeldes vorteilhaft eine in Umfangsrichtung wirkende magnetische, zweipolige Feldwelle zur Lageregelung der Rotorwelle einstellbar. Die Polpaarzahl p_{V} des Vormagnetisierungsfeldes sowie die Polpaarzahl p_{D} des mehrphasigen Drehfeldes sind durch eine entsprechende Bewicklung des Drehfeldmaschinenstators vorgebbar.

Vorzugsweise ist die mehrphasige Statorwicklung eine dreiphasige Drehstromwicklung mit einer Lochzahl q = 2/5. Die Lochzahl ist dabei der Quotient aus der Anzahl der Statornuten dividiert durch die Anzahl der Phasen sowie der Anzahl der elektromagnetischen, über das Drehfeld erzeugten Magnetpole.

Besonders vorteilhaft ist es, wenn der Drehfeldmaschinenstator zwölf Statornuten aufweist. Das Vormagnetisierungsfeld weist dann eine Polpaarzahl p_{V} von sechs und das dreiphasige Drehfeld eine Polpaarzahl p_{D} von fünf bei entsprechender Erregung durch einen angeschlossenen, dreiphasigen Drehstromsteller auf. Ein derartiges magnetisches Radiallager weist vorteilhaft einen konstruktiv sehr einfachen und äußerst kompakten Aufbau auf.

Vorzugsweise liegt das Verhältnis von einem Innendurchmesser des magnetischen Radiallagers zu seiner axialen Länge in einem Bereich von 0,3 bis 2, vorzugsweise in einem Bereich von 0,8 bis 1,25. In besonderen Anwendungsfällen kann das Verhältnis auch darunter liegende Werte, wie z.B. 0,2, oder darüber liegende Werte, wie z.B. 5, aufweisen.

Die Aufgabe der Erfindung wird weiterhin mit einem magnetischen Lagersystem gelöst, welches ein erfindungsgemäßes magnetisches Radiallager, einen mehrphasigen Drehstromsteller für die Drehfelderregung und eine Gleichstromversorgung für die Vormagnetisierungserregung aufweist. Ein derartiges System ist durch Verwendung eines herkömmlichen Drehstromstellers sowie eines durch die Erfindung besonders einfach realisierbaren, kompakten Radiallagers besonders kompakt und kostengünstig herstellbar. Die Gleichstromversorgung kann gegenüber dem Drehstromsteller galvanisch getrennt sein.

Nach einer Ausführungsform des Lagersystems weist der Drehstromsteller einen eingangsseitigen Zwischenkreis sowie eine nachgeschaltete Wechselrichtereinheit auf. Bei der Wechselrichtereinheit handelt es sich vorzugsweise um eine dreiphasige Einheit. Erfindungsgemäß erfolgt die Gleichstromversorgung über den Zwischenkreis des Drehstromstellers. Durch die Integration der Gleichstromversorgung in den Drehstromsteller, vorzugsweise in den Umrichter, vereinfacht sich der Aufbau des erfindungsgemäßen magnetischen Lagersystems nochmals. Die Gleichstromversorgung kann direkt mit dem Zwischenkreis des Drehstromstellers verbunden sein. Es kann alternativ an dem Zwischenkreis ein DC/DC-Wandler angeschaltet sein, welcher eine galvanisch getrennte, das heißt potentialfreie, Gleichstromversorgung ermöglicht.

Die Gleichstromversorgung kann nach einer weiteren Ausführungsform des magnetischen Lagersystems ein getaktetes Schaltmittel, insbesondere einen Chopper, zum Einstellen eines Vormagnetisierungsstroms aufweisen. Dadurch können vorgebbare Stromwerte für den Vormagnetisierungsstrom eingestellt werden.

Schließlich weist ein solches magnetisches Lagersystem nach einer weiteren Ausführungsform einen Positionssensor zur Erfassung der Lage einer magnetisch zu lagernden Rotorwelle in x- und y-Richtung auf. Es weist weiterhin eine Steuereinheit auf, welche Ansteuermittel für den Drehstromsteller zur Drehfelderregung des magnetischen Radiallagers derart aufweist, dass eine Lage der Rotorwelle in x- und y-Richtung vorgebbar ist. Die Steuereinheit weist vorzugsweise Regelungsmittel derart auf, dass ein vom Positionssensor erfasster Istwert der x- und y-Richtung der Rotorwelle dem vorgebbaren Sollwert entspricht. Auf diese Weise ist eine besonders exakte Lagerung der Rotorwelle möglich. Die Steuereinheit ist vorzugsweise im Drehstromsteller integriert. Der Positionssensor ist insbesondere zur berührungslosen Positionserfassung ausgebildet. Die Erfassung kann beispielsweise auf optischem oder magnetischem Wege basieren.

Die Erfindung sowie vorteilhafte Ausführungsformen der Erfindung sind anhand einiger Figuren dargestellt. Dabei zeigen:
- FIG 1: beispielhaft eine rotierende Maschine mit einer in einem magnetischen Radiallager gelagerten Rotorwelle,
- FIG 2: eine elektrische Schaltung mit einem dreiphasigen Drehstromsteller zur Ansteuerung eines sechs Elektromagneten umfassenden magnetischen Radiallagers nach dem Stand der Technik,
- FIG 3: ein beispielhaftes magnetisches Lagersystem mit einem Drehstromsteller und einem magnetischen Radiallager mit einer erfindungsgemäßen Spulenverschaltung,
- FIG 4: eine Seitenansicht des magnetischen Radiallagers gemäß FIG 3,
- FIG 5: ein erfindungsgemäßes magnetisches Lagersystem nach einer ersten Ausführungsform und
- FIG 6: ein erfindungsgemäßes magnetisches Lagersystem nach einer zweiten Ausführungsform.

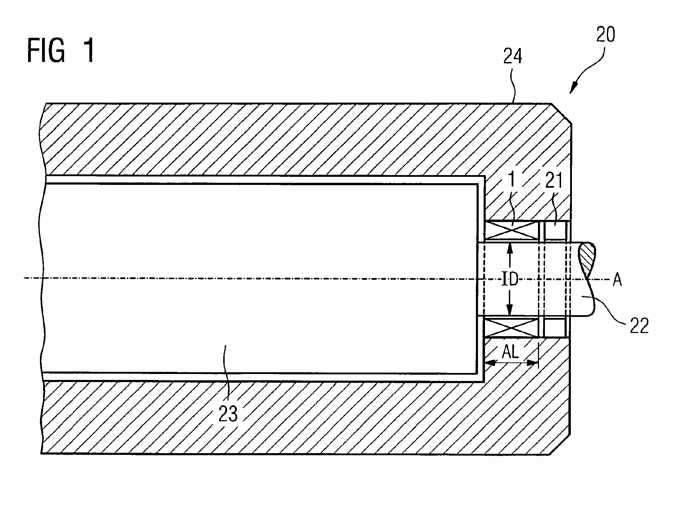

FIG 1 zeigt beispielhaft eine rotierende Maschine 20 mit einer in einem magnetischen Radiallager 1 gelagerten Rotorwelle 22. Im vorliegenden Beispiel ist die rotierende Maschine 20 ein Elektromotor mit einem auf der Rotorwelle 22 sitzenden Rotorpaket 23 und einem Stator 24. Die rotierende Maschine 20 kann alternativ z.B. eine Pumpe, ein Kompressor, eine Spindel oder eine sonstige rotierende Maschine 20 sein. Vorzugsweise handelt es sich bei den rotierenden Maschinen 20 um Turbomaschinen. Weiterhin weist die Maschine 20 ein Fanglager 21 zum Auffangen der Rotorwelle 22 bei Wegfall der Energieversorgung des magnetischen Radiallagers 1 auf. Mit dem Bezugszeichen A sind eine Drehachse der Rotorwelle 2, mit AL eine axiale Länge des magnetischen Radiallagers 1 und mit ID ein Innendurchmesser des Radiallagers 1 bezeichnet. Im vorliegenden Beispiel liegt das Verhältnis von Innendurchmesser ID zur axialen Länge AL beispielhaft bei ca. 1,5.

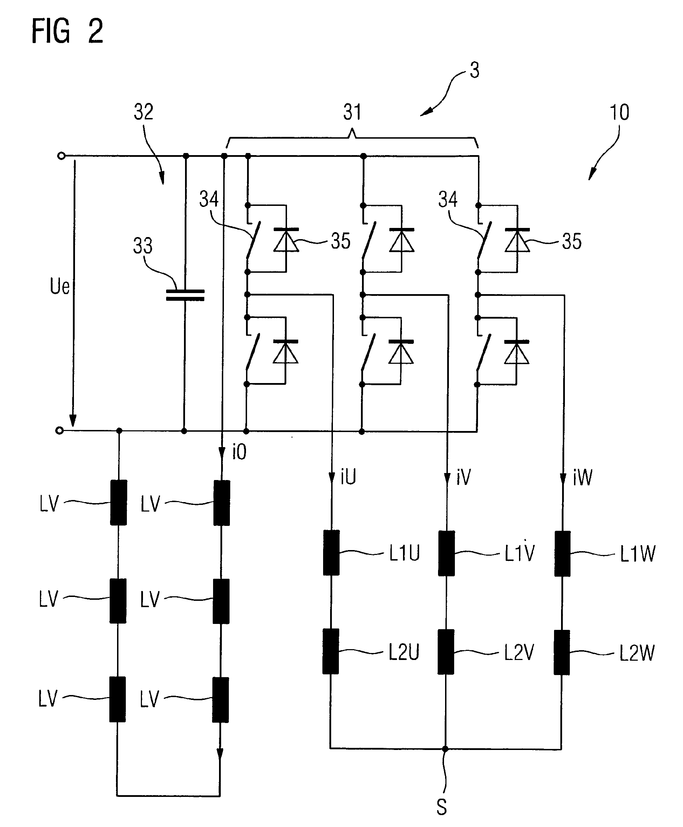

FIG 2 zeigt eine elektrische Schaltung mit einem dreiphasigen Drehstromsteller 3 zur Ansteuerung eines sechs Elektromagneten umfassenden magnetischen Radiallagers 1 nach dem Stand der Technik gemäß der eingangs genannten europäischen Patentschrift EP 0 845 084 B1. Im vorliegenden Schaltbild sind lediglich die zugehörigen sechs Spulen L1U, L2U, L1V, L2V, L1W, L2W dargestellt, wobei jeweils zwei Spulen L1U, L2U; L1V, L2V; L1W, L2W für je eine der drei Phasen U, V, W in Reihe und in einem Sternpunkt S geschaltet sind. Die drei gezeigten Stränge werden umrichterseitig mit den Phasenströmen iU, iV, iW gespeist.

Im vorliegenden Beispiel ist der Drehstromsteller 3 ein Umrichter mit einem eingangsseitigen Zwischenkreis 32 und einer nachgeschalteten Wechselrichtereinheit 31 in einer sogenannten Vollbrückenschaltung. Mit dem Bezugszeichen 34 sind die getaktet ansteuerbaren Schaltmittel, insbesondere Leistungstransistoren, bezeichnet. Mit 35 sind Freilaufdioden bezeichnet. Zur Pufferung einer eingangsseitig anliegenden Eingangsgleichspannung Ue ist ein Zwischenkreiskondensator 33 vorgesehen. Es ist weiterhin eine Reihenschaltung aus sechs Vormagnetisierungsspulen LV parallel zum Spannungszwischenkreis 32 geschaltet. Über den Zwischenkreis 32 wird ein Vormagnetisierungsstrom i0 bereitgestellt, der durch diese Reihenschaltung hindurchfließt. Die in dieser Darstellung selbst nicht dargestellten Elektromagneten weisen jeweils eine der rechten Spulen L1U, L2U, L1V, L2V, L1W, L2W und jeweils eine Vormagnetisierungsspule LV auf. Das gezeigte magnetische Lagerungssystem benötigt für die Anordnung mit sechs Elektromagneten folglich zwölf Spulen.

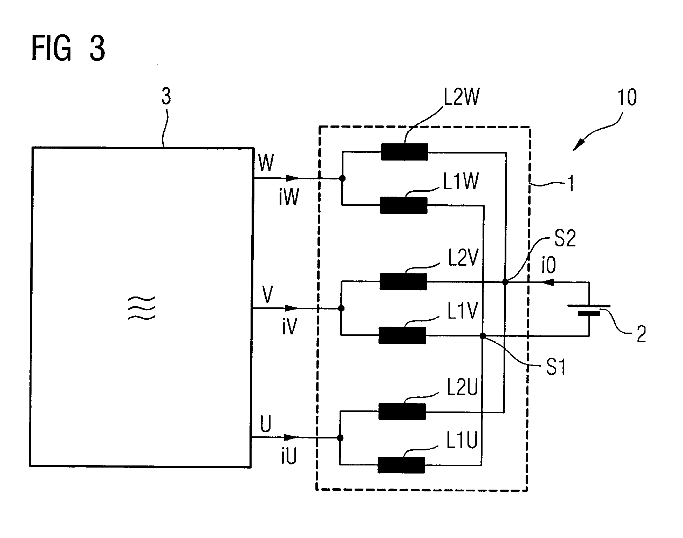

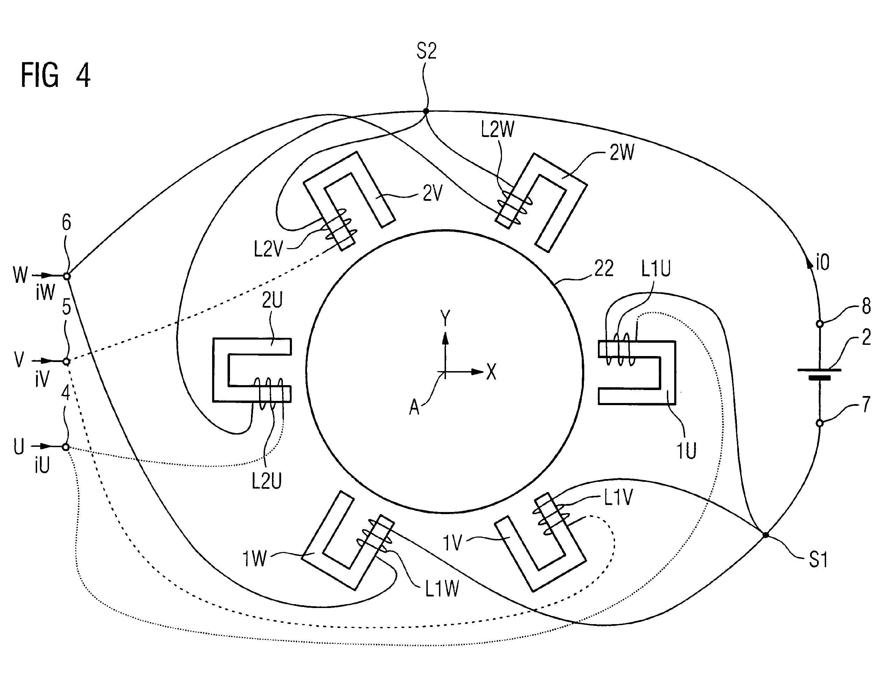

FIG 3 zeigt ein beispielhaftes magnetisches Lagerungssystem 10 mit einem Drehstromsteller 3 und einem magnetischen Radiallager 1 mit einer erfindungsgemäßen Spulenverschaltung. Das gezeigte magnetische Radiallager 1 weist vorzugsweise paarweise, sich radial gegenüberliegende und in Umfangsrichtung verteilt angeordnete Elektromagneten 1u, 2u; 1v, 2v; 1w, 2w auf, wobei diese in Umfangsrichtung um 60° versetzt angeordnet sind. Erfindungsgemäß weisen die Elektromagneten 1u, 2u; 1v, 2v; 1w, 2w jeweils eine gemeinsame Spule L1u, L2u; L1v, L2v; L1w, L2w zur Erzeugung einer Vormagnetisierung und eines magnetischen Drehfeldes auf. Wie sofort erkennbar ist, wird im Vergleich zur Lösung nach dem Stand der Technik vorteilhaft nur die Hälfte der Spulenanzahl benötigt. Dabei sind eine erste und eine zweite Hälfte der Spulen L1u, L1v, L1w; L2u, L2v, L2w, jeweils in einem Sternpunkt S1, S2 zusammengeschaltet. Diese beiden Sternpunkte S1, S2 sind gemäß der Erfindung zum Anschließen an eine Gleichstromversorgung 2 zur Vormagnetisierungserregung vorgesehen. Die verbleibenden Spulenenden sind zum Anschließen parallel an einen der Anzahl der Phasen U, V, W des Drehfeldes entsprechenden mehrphasigen Drehstromsteller 3 zur Drehfelderregung vorgesehen. Die beiden Sternpunkte S1, S2 sind über nicht weiter bezeichnete Verbindungsleitungen mit elektrischen Vormagnetisierungsanschlüssen 7, 8 verbunden. Über diese Anschlüsse 7, 8 ist eine Gleichstromversorgung 2, symbolisiert durch das Schaltsymbol einer Batterie, zur Einspeisung eines Vormagnetisierungsstroms i0 angeschaltet. Im linken Teil der FIG 4 ist eine der Phasenanzahl entsprechende Anzahl, das heißt drei für das vorliegende Beispiel, von Phasenanschlüssen 4, 5, 6 vorhanden. Diese Anschlüsse 4, 5, 6 sind über nicht weiter bezeichnete Verbindungsleitungen mit den Spulenenden der im rechten unteren Teil dargestellten ersten Hälfte der Spulen L1u, L1v, L1w der drei Elektromagneten 1u, 1v, 1w verbunden. Parallel dazu sind die Spulenenden der Spulen L2u, L2v, L2w der im linken oberen Teil gezeigten drei Elektromagneten 2u, 2v, 2w über nicht weiter bezeichnete Verbindungsleitungen mit den Phasenanschlüssen 4, 5, 6 verbunden.

FIG 4 zeigt weiter, dass die Spulen L1u, L2u; L1v, L2v; L1w, L2w von jeweils zwei sich gegenüberliegenden Elektromagneten 1u, 2u; 1v, 2v; 1w, 2w von anteiligen, nicht weiter bezeichneten Phasenströmen iU, iV, iW durchflossen werden, sodass die durch einen vorzugsweise konstanten Vormagnetisierungsstrom i0 hervorgerufenen Magnetfelder je nach Phasenlage der speisenden Phasenströme iU, iV, iW einmal verstärkt und einmal geschwächt werden. Mit anderen Worten wird die gezeigte Rotorwelle 22 je nach Phasenlage einmal näher in die eine oder andere Richtung gezogen. Der zur Einspeisung der jeweiligen Phasenströme iU, iV, iW vorgesehene Drehstromsteller ist in dieser Darstellung selbst nicht gezeigt. Im Innenbereich der Rotorwelle 22 ist zum besseren Verständnis eine x-Richtung sowie eine y-Richtung x, y für die möglichen radialen Bewegungen der Rotorwelle 22 bezeichnet.

Vorzugsweise sind die Elektromagneten 1u, 2u; 1v, 2v; 1w, 2w als Drehfeldmaschinenstator mit einer Mehrphasenwicklung ausgestaltet. In diesem Fall weist ein solcher Stator eine Vielzahl von Statornuten auf, in welchen die Mehrphasenwicklung eingelegt ist. Vorzugsweise ist ein solcher Drehfeldmaschinenstator derart bewickelt, dass sich eine Polpaarzahl p_{V} der Vormagnetisierung und eine Polpaarzahl p_{D} des Drehfeldes um den Wert 1 unterscheiden.

Ein besonders kompaktes magnetisches Radiallager 1 ist erhältlich, wenn die Mehrphasenwicklung eine Dreiphasenwicklung mit einer Lochzahl q = 2/5 ist. Dies kann z.B. mittels eines Drehfeldmaschinenstators mit zwölf Statornuten erreicht werden, in welche eine entsprechende Dreiphasenwicklung eingelegt ist, wobei das von der Dreiphasenwicklung erzeugte radiale Magnetfeld eine Polpaarzahl p_{D} von fünf im Vergleich zu einem Vormagnetisierungsfeld mit einer Polpaarzahl p_{V} von sechs aufweist.

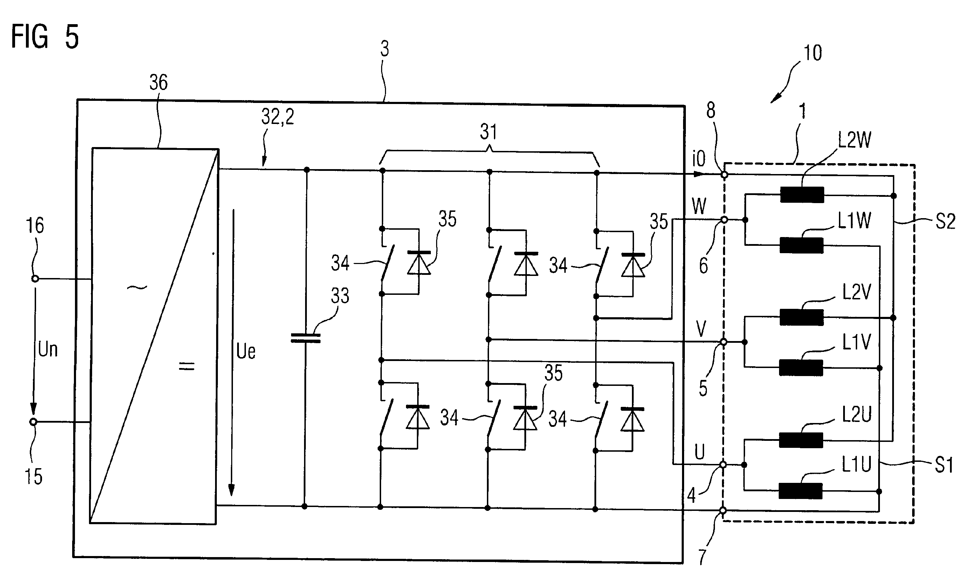

FIG 5 zeigt ein erfindungsgemäßes magnetisches Lagersystem 10 nach einer ersten Ausführungsform. Es weist im linken Teil der FIG 5 einen Drehstromsteller 3 in Form eines Umrichters und auf der rechten Seite ein angeschlossenes magnetisches Radiallager 1 auf. In dieser schaltungstechnischen Darstellung ist auch die erfindungsgemäße Verschaltung der sechs Spulen L1U, L2U; L1V, L2V; L1W, L2W in zwei Sternpunkten S1, S2 zu sehen. Erfindungsgemäß erfolgt die Einspeisung des Vormagnetisierungsstroms i0 über den Zwischenkreis 32 des Drehstromstellers 3. Mit anderen Worten weist der Zwischenkreis 32 die Funktion der Gleichstromversorgung 2 zur Erregung der Vormagnetisierung im magnetischen Radiallager 1 auf. Dem Zwischenkreis 32 ist beispielhaft eine Gleichrichtereinheit 36 vorgeschaltet, welche aus einer Eingangswechselspannung Un, wie z.B. einer Netzspannung von 230 V, eine gleichgerichtete Eingangsgleichspannung Ue für den Zwischenkreis 32 bereitstellt. Mit 15, 16 sind die zugehörigen Netzanschlüsse des Drehstromstellers 3 bezeichnet.

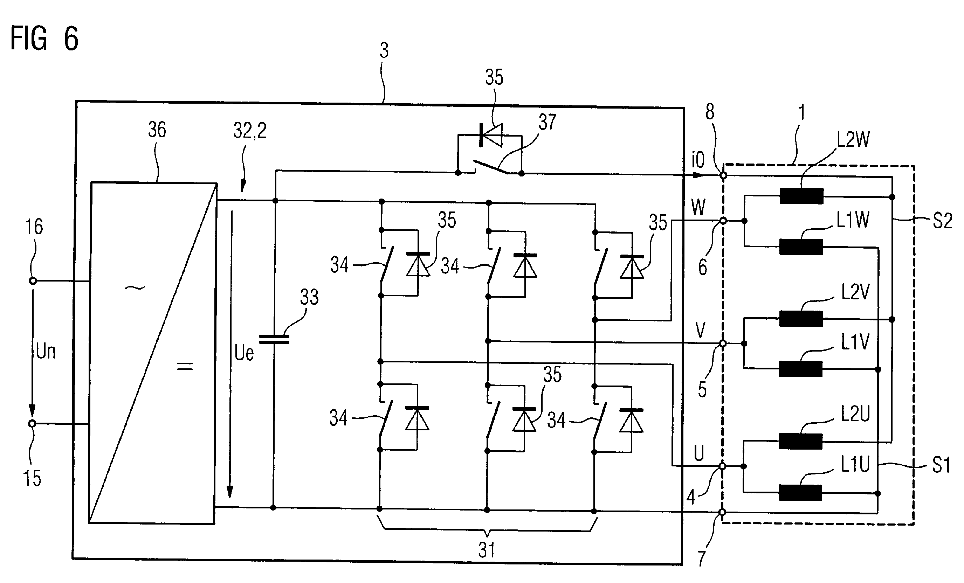

FIG 6 zeigt ein erfindungsgemäßes magnetisches Lagersystem 10 nach einer zweiten Ausführungsform. In diesem Fall weist die Gleichstromversorgung 2 ein getaktetes Schaltmittel, insbesondere einen Chopper, zum Einstellen des Vormagnetisierungsstroms i0 auf. Dadurch ist bei entsprechend getakteter Ansteuerung des Schaltmittels 37 ein faktisch stufenloser Vormagnetisierungsstrom i0 einstellbar. Auf diese Weise können z.B. die Dämpfungseigenschaften des magnetischen Radiallagers 1 eingestellt werden.

Ein magnetisches Lagersystem 10 gemäß der Erfindung kann darüber hinaus einen nicht weiter gezeigten Positionssensor zur Erfassung der Lage einer magnetisch zu lagernden Rotorwelle 22 in x- und y-Richtung aufweisen. Es kann weiterhin eine Steuereinheit mit Ansteuermitteln für den Drehstromsteller zur Drehfelderregung des magnetischen Radiallagers derart aufweisen, dass eine Lage der Rotorwelle 22 in x- und y-Richtung vorgebbar ist. Die Steuerung weist vorzugsweise Regelungsmittel derart auf, dass ein vom Positionssensor erfasster Istwert der x- und y-Richtung der Rotorwelle 22 dem vorgebbaren Sollwert entspricht. Ein entsprechendes Regelverfahren ist in dem eingangs genannten europäischen Patent EP 0 845 084 B1 im Detail beschrieben.

## Patentansprüche

1. Magnetisches Radiallager mit in Umfangrichtung verteilt angeordneten Elektromagneten (1u,2u;1v,2v;1w,2w), **dadurch gekennzeichnet, dass** die Elektromagneten (1u,2u;1v,2v;1w,2w) jeweils eine gemeinsamen Spule (L1u,L2u;L1v,L2v;L1w,L2w) zur Erzeugung einer Vormagnetisierung und eines magnetischen, mehrphasigen Drehfeldes aufweisen, wobei eine erste und zweite Hälfte der Spulen (L1u,L1v, L1w;L2u,L2v,L2w) jeweils in einem Sternpunkt (S1,S2) zusammengeschaltet sind, wobei die beiden Sternpunkte (S1,S2) zum Anschließen an eine Gleichstromversorgung (2) zur Vormagnetisierungserregung vorgesehen sind und wobei die verbleibenden Spulenenden zum parallelen Anschließen an einem entsprechenden mehrphasigen Drehstromsteller (3) zur Drehfelderregung vorgesehen sind.

2. Magnetisches Radiallager nach Anspruch 1, **dadurch gekennzeichnet, dass** das magnetische Radiallager eine der Anzahl der Phasen (U,V,W) entsprechende Anzahl von Phasenanschlüssen (4 bis 6) sowie zwei Vormagnetisierungsanschlüsse (7,8) aufweist.

3. Magnetisches Radiallager nach Anspruch 1 oder 2, **dadurch gekennzeichnet, dass** die Elektromagneten (1u,2u;1v,2v;1w,2w) als Drehfeldmaschinenstator mit einer Mehrphasenwicklung ausgestaltet sind.

4. Magnetisches Radiallager nach Anspruch 3, **dadurch gekennzeichnet, dass** der Drehfeldmaschinenstator derart bewickelt ist, dass sich eine Polpaarzahl p_{V} der Vormagnetisierung und eine Polpaarzahl p_{D} des Drehfeldes um den Wert 1 unterscheiden.

5. Magnetisches Radiallager nach Anspruch 3 und 4, **dadurch gekennzeichnet, dass** die Mehrphasenwicklung eine Dreiphasenwicklung mit einer Lochzahl q = 2/5 ist.

6. Magnetisches Lagersystem mit einem magnetischen Radiallager (1) nach einem der vorangegangenen Ansprüche, mit einem mehrphasigen Drehstromsteller (3) für die Drehfelderregung und mit einer Gleichstromversorgung (2) für die Vormagnetisierungserregung.

7. Magnetisches Lagersystem nach Anspruch 6, **dadurch gekennzeichnet, dass** der Drehstromsteller (3) einen eingangsseitigen Zwischenkreis (31) sowie eine nachgeschaltete Wechselrichtereinheit (32) aufweist und dass die Gleichstromversorgung (2) über den Zwischenkreis (31) des Drehstromstellers (3) erfolgt.

8. Magnetisches Lagersystem nach Anspruch 7, **dadurch gekennzeichnet, dass** die Gleichstromversorgung (2) ein getaktetes Schaltmittel, insbesondere einen Chopper, zum Einstellen eines Vormagnetisierungsstroms (i0) aufweist.

9. Magnetisches Lagersystem nach einem der Ansprüche 6 bis 8 **gekennzeichnet durch**
- einen Positionssensor zur Erfassung der Lage einer magnetisch zu lagernden Rotorwelle (22) in x- und y-Richtung und
- eine Steuereinheit mit Ansteuermitteln für den Drehstromsteller (3) zur Drehfelderregung des magnetischen Radiallagers (1) derart, dass eine Lage der Rotorwelle (22) in x- und y-Richtung vorgebbar ist, und mit Regelungsmitteln derart, dass ein vom Positionssensor erfasster Istwert der x- und y-Richtung der Rotorwelle (22) dem vorgebbaren Sollwert entspricht.
